Europäisches Patentamt

European Patent Office

Office européen des brevets

(11) Publication number: **0 292 579**
**A1**

(12) # EUROPEAN PATENT APPLICATION

(21) Application number: 87106321.0

(51) Int. Cl.⁴: **C04B 35/56**

(22) Date of filing: 30.04.87

(43) Date of publication of application:
**30.11.88 Bulletin 88/48**

(84) Designated Contracting States:
**DE FR GB**

(71) Applicant: **KUROSAKI REFRACTORIES CO.
LTD.
1-1, Higashihama-machi Yahatanishi-ku
Kitakyushu-shi Fukuoka 806(JP)**

(72) Inventor: **Onda, Hiroshi
1-19, Nishinarumizu 2-Chome Yahatanishi-ku
Kitakyushu-shi Fukuoka 806(JP)**
Inventor: **Hatta, Tokuaki
6-19, Higashiyama 2-chome
Yahatahigashi-ku
Kitakyushu-shi Fukuoka,805(JP)**

(74) Representative: **Patentanwälte Müller-Boré,
Deufel, Schön, Hertel, Lewald, Otto
Isartorplatz 6
D-8000 München 2(DE)**

(54) **Process for producing silicon carbide sintered products.**

(57) A process for producing a sintered silicon carbide product having high hot strength and homogeneous ultrafine structure by sintering fine silicon carbide powder in an inert atmosphere with a sintering-promoting agent and an organic silicon polymer which together provide aluminium and boron, and either adding the aluminium in element and/or nitride form and the boron polymerised within the organic silicon polymer or adding the boron in element and/or nitride form and the aluminium polymerised within the organic silicon polymer. The proportion of such organic silicon polymers used is preferably 1.5 to 30% and the boron content is preferably 0.03 to 0.3%, expressed by weight of the silicon carbide. A softening agent for the organic silicon polymer, especially a butanol, is preferably incorporated in the mixture to be sintered. The sintering atmosphere is preferably at superatmospheric pressure.

EP 0 292 579 A1

# PROCESS FOR PRODUCING SILICON CARBIDE SINTERED PRODUCTS.

## TECHNICAL FIELD.

This invention relates to a process for producing a silicon carbide sintered product having a homogeneous and fine structure with high hot strength.

## BACKGROUND OF THE INVENTION

Silicon carbide is a structural material which has various characteristics, particularly that it is chemically stable and has excellent abrasion resistance and high hot strength.

Heretofore, sintering methods such as reaction sintering, atmospheric sintering with the addition of a sintering-promoting agent such as boron, aluminium and beryllium, or pressurised sintering have been employed as the process for producing such a silicon carbide sintered product.

A process for obtaining a high density silicon carbide sintered product by adding boron-containing additives to silicon carbide powder and subjecting the moulded powder to hot pressing has already been disclosed, for example in the specification of Japanese Patent Application No. 48-142567. Also, a process of sintering powder material at normal pressure by adding 0.3 to 3% of a boron-containing compound and a carbon source equivalent to 0.05 to 4% of atomic carbon to alpha silicon carbide powder is disclosed in the specification of Japanese Patent Application No. 52-154574. Further, a hot pressing method including addition of an aluminium compound which is unstable compared to aluminium oxide ($Al_2O_3$) is also disclosed in the specification of Japanese Patent Application No. 48-033410.

A silicon carbide sintered product produced by use of a boron-containing compound as a sintering-promoting additive and a normal pressure sintering method shows a desirable effect in that no decrease of the strength at a high temperature is observed.

However, such a product has defects in practical use due to its low toughness, comparatively low strength (to an extent of 50 kg/mm$^2$) and particularly poor stress-damping capability at a high temperature, even through any sintering process such as normal pressure sintering and hydrostatic pressing or hydrostatic isothermal pressing (HP, HIP) is adopted. Although such a problem due to low toughness can be improved to some extent by use of alumina and applying hot pressing, other defects, namely a remarkable decrease of strength at a high temperature and lowering of corrosion resistance against HF (hydrofluoric acid) and hot phosphoric acid, were still unsolved.

Examples of patent documents disclosing the use of aluminium compounds as sintering-promoting agents include, among others, the specifications of Japanese Patent Application Nos. 55-54956, 57-28030, 53-157188, 53-28600 (DE-A-2813666), 54-73614, 55-57726 and 55-57727. Sintered products made using aluminium compounds disclosed in the above patent specifications show improved toughness in comparison with the products using a boron-containing compound, but are inferior in sintering ability and greater amounts need to be added for sintering. Therefore, in order to obtain a highly compact sintered product by use of an aluminium compound at an allowable level of addition, it is necessary to apply HP or HIP instead of normal pressure sintering. It is also known, however, that it is easy to cause the effect of abnormal grain growth by applying high temperature sintering.

Also, as is broadly known, HP processes can be employed only for a product having a simple shape, and HIP is expensive and needs pre-sintering to an extent of 90% by normal pressure sintering.

Therefore, considering such shortcomings of HP and HIP, a normal pressure sintering method is a most preferable method for producing silicon carbide sintered products on an industrial scale.

Among the conventional methods, reaction sintering -- comprising the steps of mixing silicon carbide particles and carbon, moulding the mixture with the addition of an organic resin binder therefor and impregnating with molten silicon to obtain a sintered product consisting of silicon carbide and silicon -- has the merit that sintered products of a complicated configuration can be obtained relatively easily. However, it has a disadvantage that the sintering temperature is higher than 1400°C. and the strength is abruptly reduced due to the melting of silicon.

Although dense and high strength products can be obtained by the pressurised sintering method, their configuration is limited to only relatively simple shapes.

On the other hand, although sintered products having high hot strength and relatively complicated shape can be obtained by the atmospheric sintering method, it has a defect in that huge plate crystals (of an order larger than several hundred microns), which are referred to as "feathers," are often formed during the densification step and significantly degrade the strength. The occurrence of such feathers can be suppressed by adopting such means as (1) lowering the sintering temperature, (2) mixing nitrogen into the atmosphere, (3) using nitride as the additives, and the like.

For example, in the specification of aforementioned Japanese Patent Application No. 49-121536 there is disclosed a method for sintering in a nitrogen atmosphere in order to prohibit the grain growth, and in the specification of Japanese Patent Application No. 53-160291 there is disclosed a method by which a finely grained silicon carbide sintered product can be obtained by use of aluminium nitride (AlN) and carbon as the sintering-promoting agent and applying normal pressure sintering.

Also, when used as a sintering agent, an aluminium compound needs to be added in a greater amount compared with the case of a boron compound, which causes the defects of deficiencies in mechanical and high temperature properties.

In the specification of Japanese Patent Application No. 53-93328 and 55-54956, simultaneous addition of an aluminium compound and a boron compound is disclosed with the aim of solving the above deficiencies. However, such simultaneous addition results in formation of an aluminium-boron-carbon compound having a low melting point, which leads to the defect of making it difficult to produce a silicon carbide sintered product having a high strength, due to formation and segregation of the aluminium-boron-carbon compound by mutual reaction of the added aluminium compound and boron compound prior to sintering.

Further, as the prior art of the invention, methods using an organic silicon polymer for producing a silicon carbide sintered product are also disclosed in the specifications of Japanese Patent Application No. 50-150115 and 53-8900 (GB-A-2015498).

The former specification discloses a method for producing a silicon carbide sintered product by adding an organic metal compound, having a function as a sintering-promoting additive, to an organic silicon polymer consisting of silicon and carbon as main components of the skeleton. According to the disclosure, the meritorious effects of uniform dispersion of added agent and improvement of sintering are due to precipitation of very fine particles of silicon carbide crystals during the step of thermal decomposition of the organic silicon polymer. The above methods, however, show such defects as a decrease of the sinter-promoting function of the organic metal due to the high activity of ultra-fine particles formed therefrom which react easily with a small amount of oxygen in the organic silicon polymer, and so one needs to increase the amount of the additives added or to apply hot pressing to obtain a highly compact sintered product, otherwise the strength of the product is only of the order of 100 kg/mm$^2$.

In fact, the super-polymerisation employing the organic metal compound as catalyst, during the heating which is caused by the necessity of previous mixing with a comparatively large amount of the organic metal compound, was recognised.

Therefore, in order to resolve the above problem in the process, the amount of the organic metal compound to be added has to be decreased, but decreasing the amount of the organic metal compound is often observed to lead to incomplete densification and abnormal grain growth of silicon carbide crystals during the sintering process.

According to the latter case of Japanese Patent Application No. 53-8900 (GB-A-2015498), a sintered product is obtained which shows a strength of only 10 kg/mm$^2$ when employing normal pressure sintering, and less than 40 kg/mm$^2$ even when employing the HP method.

This invention is based on the surprising and unpredictable discovery of how to achieve, in the face of the wide variety of conventional processes mentioned above, a method which avoids their disadvantages and enables one to obtain a silicon carbide sintered product having improved properties, and also the discovery that removing the defects in the moulded powder mixture is a very important factor for further improving the mechanical properties and the moulding properties can be remarkably improved by addition of a defined softening agent to the organic silicon polymer.

The object of this invention is to provide a process for producing a silicon carbide sintered product capable of producing relatively easily a moulded body with less defects, and inhibiting the generation of feathers and irregular grain growth without hindering the densification and with no degradation in the grain bonding, by effectively utilising an organic silicon polymer in the production of the silicon carbide sintered product.

## DISCLOSURE OF THE INVENTION.

The above purpose of this invention can be achieved by using a combination of aluminium and boron and an organic silicon polymer in a particular way.

Thus according to our invention we provide a process for producing a silicon carbide sintered product comprising the steps of moulding a mixture containing silicon carbide powder, one or more sintering-promoting agents, and an organic silicon polymer whose main skeleton is composed of silicon and carbon, while if desired incorporating an organic binder, and sintering the said moulded mixture in an inert gas atmosphere at a temperature in the range from 2050°C. to 2350°C., characterised in that both aluminium and boron are added but only one of these is added as the element or its nitride and the other is added in a form incorporated in an organic silicon polymer.

When an aluminium compound is to be employed as the promoting additive for sintering silicon carbide, we use aluminium and/or aluminium nitride (Al and/or AlN) as the sintering-promoting agent, with an organic silicon polymer which is prepared by adding, mixing and polymerising (a) a polyborosiloxane which has a skeleton of boron, silicon and oxygen and has a phenyl group or groups in at least a part of the side chains bonded to silicon, with (b) a polysilane.

Such organic silicon polymers are described more fully in United Kingdom Patent Specification No. GB.2015498.A.

It is preferred that the boron content in the mixture is more than 0.03 and less than 0.3 parts by weight for each 100 parts by weight of silicon carbide powder.

When a boron compound is to be employed as the promoting additive for sintering silicon carbide, we use boron and/or boron nitride (B and/or BN) as the sintering-promoting agent, with an organic silicon polymer which is obtained by adding, mixing and polymerising an anhydrous aluminium halide with a polysilane, and wherein the said organic silicon polymer shows absorption in the range 450 to 300 cm$^{-1}$ of the far infrared region of the infrared absorption spectrum and the end of absorption in the ultraviolet absorption spectrum is from 340 to 370 nm, and has a number means molecular weight of 400 to 5000.

Such organic silicon polymers and methods for making them are more fully described in German Patent Specification OLS. No. DE 3136786.A.

The mixture containing silicon carbide powder may also contain carbon, either added as such or formed during the heating, for example by decomposition of organic polymer or binder.

The process can be carried out by first coating the starting material of silicon carbide particles with the organic silicon polymer.

According to our present invention, by moulding silicon carbide powder treated in this way and subjecting it to sintering, the various problems in the known processes using an organic metal compound and an organic silicon polymer, as mentioned above, can be solved and the sintered product produced by the process of this invention shows higher strength and less decrease in mechanical properties at a high temperature compared with prior products.

The mechanism showing such a meritorious effect is believed to be that the presence of an organic silicon polymer having a specified combination of sintering additives, employed on the surface of silicon carbide particles less than 1 μm, prohibits segregation of a compound phase having a low melting point which is caused when employing an organic silicon polymer and simultaneously adding an aluminium and a boron compound and decomposing the polymer, and that a preferred amount of a complex layer containing silicon/carbon/aluminium/boron/nitrogen/oxygen in indefinite ratio to each other is formed by reaction of said organic silicon polymer and said sintering-promoting additives on the surface of the initial silicon carbide particles during the heating step. These effects are believed to prohibit the grain growth, improve compactness and produce a silicon carbide sintered product having a uniform structure.

According to this invention, fine particles of diameter less than 1 μ are used as the starting silicon carbide material in order to maintain the sinter-driving force.

The term "organic silicon polymer" in this invention means those high molecular organic silicon compounds whose skeleton is mainly composed of silicon and carbon, whose side chains are decomposed almost entirely at a temperature of about 800°C. to form a nearly amorphous continuous structure composed mainly of silicon-carbon bonds, and which deposit extremely fine silicon carbide of less than 1000 Angstrom at a temperature higher than 1000°C..

The amount of the organic silicon polymer added is from 1.5 to 30 parts by weight based on 100 parts by weight of the silicon carbide powder. If the amount added is less than 1.5 parts by weight, the said effect by the extremely fine silicon carbide is insufficient, and if it is more than 30 parts by weight, sufficient strength cannot be obtained.

Further, compounds containing boron, aluminium, and beryllium, as well as carbonaceous materials (or carbon itself) can be used as a sintering-promoting agent, and in particular aluminium and an aluminium compound such as aluminium nitride are suitably applicable for controlling the extremely fine structure of the sintered product. The amount of an aluminium compound to be added is preferably from 0.5 to 5 parts by weight, calculated as the amount of aluminium, based on 100 parts by weight of the total silicon carbide content in the resulting silicon carbide sintered product.

Furthermore, while an organic binder can be added as required for moulding, no particular type of organic binder is required. Examples of organic binder which can be used include phenol resins, furan resins or the like.

It is preferred that a softening agent for the organic silicon polymer is added to the mixture, to improve the product. The preferred softening agent is butyl alcohol, though others may be used.

The preferred method for shaping the mixture prior to sintering is hydrostatic moulding.

Referring to the sintering conditions which may be used in the process of this invention, although sintering can be performed without hindrance to the densification, for example, even in a nitrogen-containing atmosphere, it is preferred that an argon gas atmosphere is usually employed. In this case, a much densified sintered product can be obtained by increasing the pressure of the argon gas higher than 1 atmosphere.

It is preferred that sintering is carried out in an inert gas atmosphere under a pressure of more than 1 atmosphere and less than 100 atmospheres.

Further, the sintering step in this invention is performed within a range between 2050°C. and 2350°C.. If the sintering temperature is lower than 2050°C., insufficient densification is obtained, and if it is higher than 2350°C., decomposition of silicon carbide results and again fails to produce a dense sintered product.

BEST MODE FOR CARRYING OUT THE INVENTION.

The reason for setting the conditions in the production process according to this invention will now be illustrated referring to test examples. All the testing materials hereinafter were prepared in the same manner as in Example 1 described below.

The organic silicon polymers employed herein are respectively:-

"Organic Silicon Polymer I," which was prepared by adding a polyborosiloxane, having a skeleton consisting of boron, silicon and oxygen and phenyl groups as at least a part of the side chains bonded to silicon, with a polysilane, mixing and polymerising.

"Organic Silicon Polymer II," which was prepared by adding an anhydrous aluminium halide to a polysilane, mixing and polymerising, and shows absorption in the range 450 to 300 cm$^{-1}$ of the far infrared region of the infrared absorption spectrum and the end of absorption in the ultraviolet absorption spectrum is from 340 to 370 nm, and has a number means molecular weight of 400 to 5000.

"Organic Silicon Polymer III," for comparison, which was prepared by polymerisation of a polysilane without any additives.

Test Example 1.

The effect of the addition amount of Organic Silicon Polymer II on the sintered product was confirmed by the experiment.

Table 1 shows the conditions and results of the test example. It was confirmed from this test example that if the addition amount is less than 0.5 parts by weight the effect due to the ultrafine silicon carbide is insufficient, and if it is more than 30 parts by weight insufficient strength can be obtained.

Test Example 2.

The effects of the sintering temperature on the properties of the sintered product were examined with respect to powder compacts containing Organic Silicon Polymer II. The conditions and results of the test are as shown in Table 2.

It was confirmed from this test example that if the sintering temperature is lower than 2050°C., insufficient densification results and, if it is higher than 2350°C., silicon carbide decomposition results and again a dense sintered product fails to be obtained.

Text Example 3.

The effect of a nitrogen gas atmosphere as the sintering atmosphere was examined. Sintering was carried out at 2200° C. for powder compacts made with and without adding 7 parts by weight of the Organic Silicon Polymer II, while varying the atmosphere. The conditions and the results of the test are shown in Table 3.

From this test example it was confirmed that, although hindrance to the densification and reduction of strength were observed for sintering in the nitrogen-containing atmosphere in the moulded body without addition of the organic silicon polymer, no hindrance to the densification occurred and the strength was increased even when the sintering was carried out in an atmosphere containing a small proportion of nitrogen for the sintered product with added organic silicon polymer.

Test Example 4.

The effects of the addition of aluminium or aluminium nitride (Al, AlN) as the sintering-promoting agents together with the effect of adding the organic silicon polymer were examined. Experiments were carried out for the case with or without adding 7 parts by weight of the organic silicon polymer. The conditions and the results of the experiment are shown in Table 4.

It was confirmed from the test that the addition of the organic silicon polymer has an effect of suppressing the generation of feathers, and the effect of adding aluminium or aluminium nitride is obtained when the amount added is within the range 0.5 to 5 parts by weight, calculated as Al.

Test Example 5.

This testing Example is to show the meritorious effcts of the combination of organic silicon polymer and promoting additives for sintering. Table 5 shows the experimental conditions and results. According to the results, it is clear that a silicon carbide sintered product having preferable properties was obtained.

DESCRIPTION.

The merits of the invention will now be made clear referring to the following examples.

Example 1.

To 100 parts by weight of alpha silicon carbide powder of average particle size 0.4 $\mu$ were added 7 parts by weight of Organic Silicon Polymer I and 200 parts by weight of hexane as the solvent. These, after mixing for 14 hours in a ball mill, were dried while removing hexane and further pulverised and sieved. Thus, silicon carbide powder coated on the surface with the organic silicon polymer was obtained.

To 100 parts by weight of the total amount of silicon carbide in the primary powder were added 5.7 parts by weight of novolac type phenol resin, 0.7 parts by weight of aluminium powder of average particle size 5 $\mu$, 0.6 parts by weight of hexamethylenetetramine, 1.5 parts by weight of aluminium nitride (AlN) powder of average particle size 2 $\mu$ and 200 parts by weight of ethanol as the dispersant. These, after mixing in a ball mill for 14 hours, were dried while removing ethanol and pulverised and sieved to produce a moulding powder of particle size less than 37 $\mu$.

The moulding powder was subjected to rubber press under the pressure of 1.4 t/cm$^2$ to produce a powder compact 20 ×15 × 50 mm in size.

The powder compact was heated to a temperature of 2200° C. under an argon atmosphere and held there for 60 minutes. The sintered product thus obtained showed about 18% linear shrinkage and had a density of 3.18 g/cm$^3$ (99% TD).

The structure of the sintered product comprised platelet particles of particle size about 2 $\mu$ entangled or interwoven with each other and was homogeneous, with neither feathers nor inhomogeneous grain growth.

A specimen of 3 × 4 × 40 mm in size was cut out from the sintered product by using a diamond cutter and, upon measuring the three point bending strength at 1300° C., it showed an average strength of 95 kg/mm$^2$ and the Weibull coefficient determined for 30 specimens under the same conditions was m = 17.

6

Comparative Example.

A sintered product was obtained in the same manner as in Example 1, but the organic silicon polymer was not added.

The sintered product thus obtained showed about 16.6% linear shrinkage and it had a density of 3.11 g/cm$^2$ (97% TD).

The structure of the sintered product was not homogenous, comprising platelets of particle size 3 to 4 $\mu$ size and feathers of about 100 $\mu$ in size.

Upon determining the three point bending strength at 1300°C. in the same manner as in Example 1, it had an average strength of 65 kg/mm$^2$ and the Weibull coefficient determined for 30 specimens was m = 11.

Example 2.

A powder for moulding with particle size less than 37 $\mu$ prepared in the same manner as in Example 1 was placed in a graphite mould with a 50 mm inner diameter and subjected to pressurised sintering at 2050°C. under a pressure of 400 kg/cm$^2$. The sintered product thus obtained had a density of 3.19 g/cm$^3$ and the average three point bending strength was 71.2 kg/mm$^2$.

Example 3.

To 100 parts by weight of the total silicon carbide content in the primary powder, prepared in the same manner as in Example 1, were mixed 5.7 parts by weight of novolac type phenol resin, 0.6 parts by weight of hexamethylenetetramine, and 1.0 parts by weight of amorphous boron in a ball mill. These were then dried, pulverised and sieved to obtain a moulding powder of particle size less than 37 $\mu$. The moulding powder was subjected to rubber press and then to atmospheric sintering at 2200°C. in argon. The sintered product thus obtained had a density of 3.18 g/cm$^{23}$ and an average three point bending strength of 85 kg/mm$^2$.

Example 4.

10 parts by weight of butanol was added to the moulding powder prepared in the same manner as in Example 1. The sintering and moulding were carried out in the same manner as in Example 1. The average three point bending strength was 97 kg/mm$^2$ and the Weibull coefficient was m = 21 for 30 specimens thus obtained.

Example 5.

The moulded body prepared in the same manner as in Example 1 was heated under an argon atmosphere at 25 atmospheres to a temperature of 2200°C. and held there for 60 minutes, to obtain a sintered product of 3.20 g/cm$^3$.

Example 6.

By the same manner of Example 1 but adding 7 parts by weight of Organic Polymer II to 100 parts by weight of alpha silicon carbide powder and 0.5 parts by weight of amorphous boron as a sintering additive to 100 parts by weight of total silicon carbide, and sintering at 2100°C., a sintered product was obtained which showed the density of ? ⁘ g/cm$^{-1}$ and the three point bending strength at 1300°C. was 90 kg/mm$^2$ on average.

## Table 1.

| No. | Addition amount of organic silicon polymer (parts by weight) | Linear shrinkage (%) | Density of sintered product $(g/cm^3)$ | Average strength $(kg/mm^2)$ | Structure |
|---|---|---|---|---|---|
| 1 | 0 | 17.6 | 3.14 | 62 | irregular particle, feather |
| 2 | 1.5 | 17.9 | 3.16 | 72 | platelet irregular particle |
| 3 | 5 | 18.0 | 3.17 | 81 | platelet uniform |
| 4 | 10 | 18.3 | 3.19 | 92 | " |
| 5 | 20 | 18.0 | 3.17 | 85 | " |
| 6 | 30 | 17.2 | 3.10 | 71 | regular particles, uniform |
| 7 | 40 | 16.0 | 3.00 | 61 | " |

## Table 2.

| No. | Sintering temperature (°C) | Linear shrinkage (%) | Density of sintered product (g/cm³) | Average strength at 1300°C * (kg/mm²) |
|---|---|---|---|---|
| 1 | 2000 | 12.3 | 2.73 | 28 |
| 2 | 2100 | 16.9 | 3.08 | 70 |
| 3 | 2180 | 17.8 | 3.15 | 93 |
| 4 | 2240 | 17.6 | 3.13 | 85 |
| 5 | 2300 | 16.2 | 3.02 | 74 |
| 6 | 2400 | 12.3 | 2.73 | - |

\* According to JIS R1601

## Table 3.

| No. | Condition for atmosphere | Addition amount of organic silicon polymer (parts by weight) | Density of sintered product (g/cm$^3$) | Average strength at 1300°C (kg/mm$^2$) | Structure |
|---|---|---|---|---|---|
| 1 | Ar 99.99 V/O N$_2$ 0.01 V/O | 0.0 | 3.01 | 69 | regular particle |
| 2 | " | 7.0 | 3.16 | 96 | platelet particle |
| 3 | Ar 99.9 V/O N$_2$ 0.5 V/O | 0.0 | 2.81 | 32 | porous |
| 4 | " | 7.0 | 3.12 | 73 | platelet particle |

## Table 4.

| No. | Addition amount of organic silicon polymer (parts by weight) | Al amount (parts by weight) | AlN amount (parts by weight) | Content as Al (parts by weight) | Density of sintered particles (g/cm³) | Average strength at 1300°C (kg/mm²) | Structure |
|---|---|---|---|---|---|---|---|
| 1 | 0 | 1.0 | 0 | 1.0 | 3.15 | 62 | inhomogenous, feather |
| 2 | 7 | 1.0 | 0 | 1.0 | 3.17 | 83 | platelet homogenous |
| 3 | 0 | 0 | 1.52 | 1.0 | 3.11 | 68 | regular particle |
| 4 | 7 | 0 | 1.52 | 1.0 | 3.15 | 88 | platelet homogenous |
| 5 | 7 | 0.3 | 1.52 | 1.3 | 3.18 | 90 | " |
| 6 | 7 | 1.0 | 0.46 | 1.3 | 3.19 | 82 | " |
| 7 | 7 | 2.0 | 3.04 | 4.0 | 3.13 | 75 | " |
| 8 | 7 | 3.0 | 3.04 | 5.0 | 3.12 | 77 | " |
| 9 | 7 | 2.0 | 4.56 | 5.0 | 3.12 | 72 | " |
| 10 | 7 | 3.0 | 4.56 | 6.0 | 3.12 | 62 | " |
| 11 | 7 | 0.5 | 0 | 0.5 | 3.10 | 73 | " |
| 12 | 0 | 0.5 | 0 | 0.5 | 2.80 | 43 | porous |
| 13 | 7 | 0.4 | 0 | 0.4 | 2.91 | 51 | " |

Table 5.

| No | Organic Si polymer employed | Promoting additives | Density of sintered product $(kg/cm^{-1})$ | Average strength at $1300°C.$ $(kg/mm^2)$ |
|----|----|----|----|----|
| 1 | I | AlN | 3.19 | 85 |
| 2 | I | B | 3.18 | 65 |
| 3 | II | AlN | 3.18 | 63 |
| 4 | II | B | 3.18 | 83 |
| 5 | III | AlN | 3.17 | 62 |
| 6 | III | B | 3.18 | 60 |

## Claims

1. A process for producing a silicon carbide sintered product comprising the steps of moulding a mixture containing silicon carbide powder, one or more sintering-promoting agents, and an organic silicon polymer whose main skeleton is composed of silicon and carbon, while if desired incorporating an organic binder, and sintering the said moulded mixture in an inert gas atmosphere at a temperature in the range from 2050°C. to 2350°C., characterised in that both aluminium and boron are added but only one of these is added as the element or its nitride and the other is added in a form incorporated in an organic silicon polymer.

2. A process for producing a silicon carbide sintered product as defined in Claim 1, characterised in that the said sintering-promoting agent is aluminium and/or aluminium nitride, and the said organic silicon polymer is prepared by adding, mixing and polymerising (a) a polyborosiloxane which has a skeleton of boron, silicon and oxygen and has a phenyl group at least one a part of the side chains bonded to silicon, with (b) a polysilane.

3. A process for producing a silicon carbide sintered product as defined in Claim 1, characterised in that the said sintering-promoting agent is boron and/or boron nitride, and the said organic silicon polymer is obtained by adding, mixing and polymerising an anhydrous aluminium halide with a polysilane, wherein said organic silicon polymer shows absorption in the range 450 to 300 $cm^{-1}$ of the far infrared region of the infrared absorption spectrum and the end of absorption in the ultraviolet absorption spectrum is from 340 to 370 nm, and has a number means molecular weight of 400 to 5000.

4. A process for producing a silicon carbide sintered product as defined in any of Claims 1 to 3, characterised in that the said organic silicon polymer is used in a proportion of from 1.5 to 30 parts by weight for each 100 parts by weight of silicon carbide powder.

5. A process for producing a silicon carbide sintered product as defined in any of Claims 1 to 4, characterised in that the boron content in the mixture is more than 0.03 and less than 0.3 parts by weight for each 100 parts by weight of silicon carbide powder.

6. A process for producing a silicon carbide sintered product as defined in any of Claims 1 to 5, characterised in that sintering is carried out in an inert gas atmosphere under a pressure of more than 1 atmosphere and less than 100 atmospheres.

7. A process for producing a silicon carbide sintered product as defined in any of Claims 1 to 6, characterised in that a softening agent for the organic silicon polymer is added to the mixture and the mixture is subjected to hydrostatic moulding.

8. A process for producing a silicon carbide sintered product as defined in Claim 6, characterised in that the softening agent is butyl alcohol.

13

## DOCUMENTS CONSIDERED TO BE RELEVANT

| Category | Citation of document with indication, where appropriate, of relevant passages | Relevant to claim | CLASSIFICATION OF THE APPLICATION (Int. Cl.3) |
|---|---|---|---|
| X | EP-A-0 148 277 (KUROSAKI REFRACTORIES CO. LTD.)<br>* amended, claims 1-4, 6-8 *<br>--- | 1-8 | C 04 B 35/56 |
| D,A | GB-A-2 015 498 (THE RESEARCH INSTITUTE FOR SPECIAL INORGANIC MATERIALS)<br>* claim 1 *<br>----- | 1,2 | |

TECHNICAL FIELDS
SEARCHED (Int. Cl.3)

C 04 B 35/56

The present search report has been drawn up for all claims

| Place of search | Date of completion of the search | Examiner |
|---|---|---|
| BERLIN | 15-12-1987 | STROUD J.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)